# EUROPEAN PATENT APPLICATION

(11) **EP 3 255 627 A1**
(43) Date of publication of application: **13.12.2017**
(21) Application number: 15884983.6
(22) Date of filing: 16.03.2015
(51) Int. Cl.: G09G 3/20

(54) **IMAGE DISPLAY METHOD AND DEVICE**

(71) Applicant: Huawei Technologies Co. Ltd., Shenzhen, Guangdong 518129 (CN)
(72) Inventor: LUO, Honglei, Shenzhen Guangdong 518129 (CN); WANG, Hao, Shenzhen Guangdong 518129 (CN); LIU, Chen, Shenzhen Guangdong 518129 (CN); WU, Jie, Shenzhen Guangdong 518129 (CN); HUANG, Hai, Shenzhen Guangdong 518129 (CN); LIANG, Yanfeng, Shenzhen Guangdong 518129 (CN)
(74) Representative: Körber, Martin Hans
(86) International application number: PCT/CN2015/074314
(87) International publication number: WO 2016/145599

(57) **Abstract**

An image display method and an image display apparatus are disclosed. The method includes: determining a target area in which an image is fixedly displayed and that is in a display screen; obtaining a specified image displayed in the target area; and adjusting a display manner of the specified image on the display screen in a manner of respectively and independently performing gray-scale adjustment on different areas in the specified image, so as to prevent the specified image from being displayed in the target area in the display screen for a long time, and alleviate that a screen residual image is generated on the display screen due to that the specified image is displayed on the display screen for an excessively long time.

## Description

### TECHNICAL FIELD

The present invention relates to the field of display technologies, and in particular, to an image display method and apparatus.

### BACKGROUND

An organic light-emitting diode (Organic Light-Emitting Diode, OLED for short) is a thin-film multi-layer device including an electrode and an organic material coating. Because an OLED display screen has characteristics such as self-illumination, low power consumption, and a large visual angle, a growing quantity of mobile terminal manufacturers select an OLED display screen including an OLED as a display apparatus of a mobile terminal.

A display apparatus of a mobile terminal usually needs to display fixed images such as an unlock interface, an application icon, and a virtual key for a long time in a process of displaying an image. According to a display principle of an OLED, if an area on an OLED display screen displays a fixed image for a long time, a gray-scale voltage of the area needs to be maintained at a fixed value for a long time. Consequently, a luminance attenuation speed of an organic material coating of the area is different from that of another area. Different luminance attenuation speeds of different areas of the display screen lead to generation of a screen residual image when the display screen switches and displays different images. For example, because gray scales of an unlock button image and an unlock background image in an unlock interface are different, when the display screen switches and displays a pure color image after displaying the unlock interface for a long time, a residual image of the unlock interface is left on the pure color image due to different luminance attenuation speeds of an area used to display the unlock button image and an area used to display an unlock background. It can be learned from the above that, if an OLED display screen displays an image in an existing image display manner, a screen residual image may be easily generated. Consequently, a display effect of the OLED display screen is affected.

### SUMMARY

Embodiments of the present invention provide an image display method and apparatus, so as to alleviate a problem that a screen residual image is easily generated when an OLED display screen displays an image.

According to a first aspect, an embodiment of the present invention provides an image display method, where the method includes:
determining a target area in which an image is fixedly displayed and that is in a display screen; obtaining a specified image displayed in the target area; and adjusting a display manner of the specified image on the display screen in a manner of respectively and independently performing gray-scale adjustment on different areas in the specified image.

With reference to the first aspect, in a first possible implementation of the first aspect, the determining a target area in which an image is fixedly displayed and that is in a display screen includes: detecting gray-scale voltages of pixels of the display screen; and selecting a first area including pixels whose gray-scale voltages are predetermined voltage values as the target area. With reference to the first aspect, in a second possible implementation of the first aspect, gray-scale voltage duration of pixels of the display screen is detected; and a second area including pixels whose gray-scale voltage duration exceeds a preset time threshold is selected as the target area. With reference to any one of the first aspect, or the first to the second possible implementations of the first aspect, in a third possible implementation of the first aspect, the adjusting a display manner of the specified image on the display screen in a manner of respectively and independently performing gray-scale adjustment on different areas in the specified image includes: identifying a functional image and a background image from the specified image; and periodically exchanging gray scales of the functional image and the background image.

With reference to the third possible implementation of the first aspect, in a fourth possible implementation of the first aspect, before the periodically exchanging gray scales of the functional image and the background image, further includes: setting the gray scale of the functional image to a first preset gray scale and setting the gray scale of the background image to a second preset gray scale, where the first preset gray scale is different from the second preset gray scale.

With reference to any one of the first aspect, or the first to the second possible implementations of the first aspect, in a fifth possible implementation of the first aspect, the adjusting a display manner of the specified image on the display screen in a manner of respectively and independently performing gray-scale adjustment on different areas in the specified image includes: generating an alternative image corresponding to the specified image; and periodically and alternately displaying the specified image and the alternative image in the target area.

With reference to any one of the first aspect, or the first to the second possible implementations of the first aspect, in a sixth possible implementation of the first aspect, the adjusting a display manner of the specified image on the display screen in a manner of respectively and independently performing gray-scale adjustment on different areas in the specified image includes: identifying a functional image and a background image from the specified image; and periodically adjusting a display location of the functional image relative to the background image.

With reference to any one of the first aspect, or the first to the second possible implementations of the first aspect, in a seventh possible implementation of the first aspect, the adjusting a display manner of the specified image on the display screen in a manner of respectively and independently performing gray-scale adjustment on different areas in the specified image includes: identifying a profile curve of a functional image from the specified image; and setting gray scales of a specified quantity of pixels at two sides of the profile curve to a third preset gray scale.

With reference to any one of the first aspect, or the first to the seventh possible implementations of the first aspect, in an eighth possible implementation of the first aspect, the determining a target area in which an image is fixedly displayed and that is in a display screen includes: when the display screen displays an unlock interface or displays an application menu interface, determining the target area in which an image is fixedly displayed and that is in the display screen.

According to a second aspect, an embodiment of the present invention provides an image display apparatus, where the apparatus includes: a determining unit, configured to determine a target area in which an image is fixedly displayed and that is in a display screen; an obtaining unit, configured to obtain a specified image displayed in the target area; and an adjustment unit, configured to adjust a display manner of the specified image on the display screen in a manner of respectively and independently performing gray-scale adjustment on different areas in the specified image.

With reference to the first aspect, in a first possible implementation of the first aspect, the determining unit includes: a first detection subunit, configured to detect gray-scale voltages of pixels of the display screen; and a first selection subunit, configured to select a first area including pixels whose gray-scale voltages are predetermined voltage values as the target area.

With reference to the first aspect, in a second possible implementation of the first aspect, the determining unit includes: a second detection subunit, configured to detect gray-scale voltage duration of pixels of the display screen; and a second selection subunit, configured to select a second area including pixels whose gray-scale voltage duration exceeds a preset time threshold as the target area.

With reference to any one of the first aspect, or the first to the second possible implementations of the first aspect, in a third possible implementation of the first aspect, the adjustment unit includes: a first identification subunit, configured to identify a functional image and a background image from the specified image; and a gray scale exchange subunit, configured to periodically exchange predetermined gray scales of the functional image and the background image.

With reference to the third possible implementation of the first aspect, in a fourth possible implementation of the first aspect, the adjustment unit further includes: a first setting subunit, configured to: set the predetermined gray scale of the functional image to a first preset gray scale and set the predetermined gray scale of the background image to a second preset gray scale, where the first preset gray scale is different from the second preset gray scale.

With reference to any one of the first aspect, or the first to the second possible implementations of the first aspect, in a fifth possible implementation of the first aspect, the adjustment unit includes: an alternative-image generation subunit, configured to generate an alternative image corresponding to the specified image; and an image adjustment subunit, configured to periodically and alternately display the specified image and the alternative image in the target area.

With reference to any one of the first aspect, or the first to the second possible implementations of the first aspect, in a sixth possible implementation of the first aspect, the adjustment unit includes: a second identification subunit, configured to identify a functional image and a background image from the specified image; and a location adjustment subunit, configured to periodically adjust a display location of the functional image relative to the background image.

With reference to any one of the first aspect, or the first to the second possible implementations of the first aspect, in a seventh possible implementation of the first aspect, the adjustment unit includes: a third identification subunit, configured to identify a profile curve of a functional image from the specified image; and a second setting subunit, configured to set gray scales of a specified quantity of pixels at two sides of the profile curve to a third preset gray scale.

With reference to any one of the first aspect, or the first to the seventh possible implementations of the first aspect, in an eighth possible implementation of the first aspect, the determining unit is specifically configured to: when the display screen displays an unlock interface or displays an application menu interface, determine the target area in which an image is fixedly displayed and that is in the display screen.

According to a third aspect, an embodiment of the present invention further provides another image display apparatus, where the apparatus includes: includes a processor, a memory, and a display screen, where the processor is configured to: determine a target area that is used to display a fixed image and that is in the display screen; obtain a specified image displayed in the target area; and adjust a display manner of the specified image on the display screen in a manner of respectively and independently performing gray-scale adjustment on different areas in the specified image.

In the embodiments of the present invention, a target area in which an image is fixedly displayed and that is in a display screen is determined; a specified image displayed in the target area is obtained; and a display manner of the specified image on the display screen is adjusted in a manner of respectively and independently performing gray-scale adjustment on different areas in the specified image. By means of the embodiments of the present invention, a terminal may adjust the display manner of the specified image on the display screen in the manner of respectively and independently performing gray-scale adjustment on the different areas in the specified image, so as to shorten a time of displaying a fixed image, thereby alleviating a problem that a screen residual image is easily generated when an OLED display screen displays an image.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, a person of ordinary skill in the art may still derive other drawings from these accompanying drawings without creative efforts.
FIG. 1 is a flowchart of an image display method according to an embodiment of the present invention;
FIG. 2 is a schematic diagram of a mobile terminal interface according to an embodiment of the present invention;
FIG. 3 is another schematic diagram of a mobile terminal interface according to an embodiment of the present invention;
FIG. 4 to FIG. 12 are schematic diagrams of display effects of an image display method according to embodiments of the present invention;
FIG. 13 is a schematic structural diagram of an image display apparatus according to an embodiment of the present invention; and
FIG. 14 is another schematic structural diagram of an image display apparatus according to an embodiment of the present invention.

### DESCRIPTION OF EMBODIMENTS

To make a person skilled in the art understand the solutions in the present invention better, the following clearly describes the technical solutions in the embodiments of the present invention with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative efforts shall fall within the protection scope of the present invention.

In the embodiments of the present invention, a functional image is an image for which a terminal makes a corresponding response after the terminal receives an operation of a user on the image, and the response may be executing a program corresponding to the image, displaying information corresponding to the image, or the like. For example, the functional image may be an unlock button, an application icon, a virtual key, a notification bar, or a time indicator.

In the embodiments of the present invention, a background image is an image for which a terminal does not make a response after the terminal receives an operation of a user on the image. For example, the background image may be a wallpaper, an interface background, or an unlock background.

In the embodiments of the present invention, a target area is a target area in which an image is fixedly displayed and that is in a display screen. For example, the target area may be an area, such as a virtual key area or a notification bar area, that is used for display, in which a displayed image does not change for a long time, and that is in the display screen.

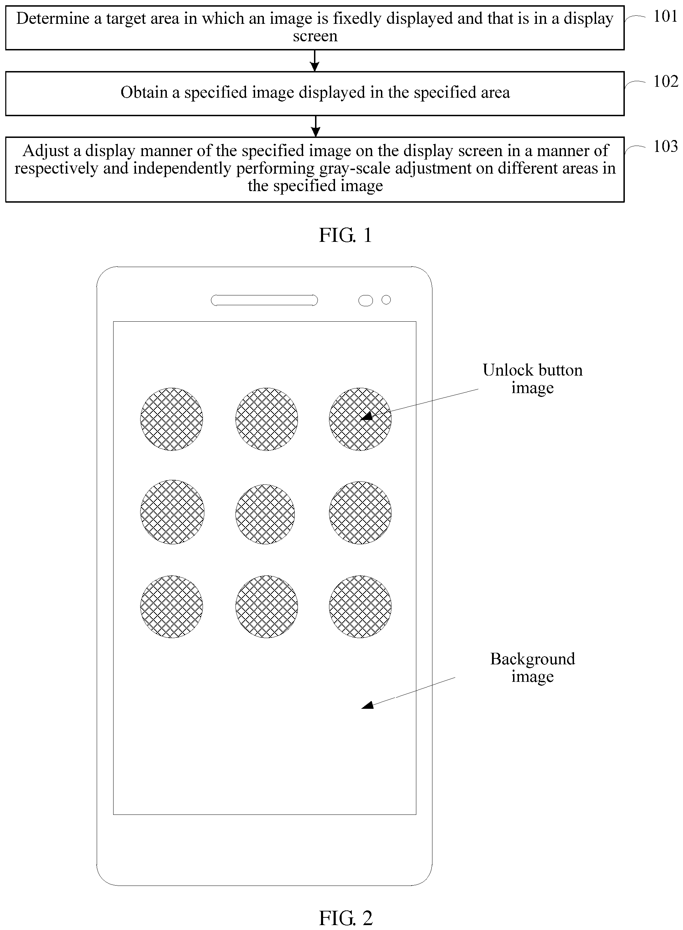

Referring to FIG. 1, FIG. 1 is a flowchart of an image display method according to an embodiment of the present invention.

Step 101: Determine a target area in which an image is fixedly displayed and that is in a display screen.

A terminal first determines the target area in which an image is fixedly displayed and that is in the display screen. The terminal may determine the target area in different manners such as gray scale identification and area identification according to different actual requirements.

When an OLED display screen, an active-matrix organic light emitting diode (Active-matrix organic light emitting diode, AMOLED for short) display screen, or the like displays different images, gray-scale voltages of pixels are different. Therefore, the terminal may detect, in a gray scale identification manner, by using gray-scale voltages of pixels, a target area that is used to display a fixed image and that is in the display screen.

In an implementation, when the display screen displays a fixed image, gray-scale voltages of pixels of the display screen are predetermined gray-scale voltages corresponding to the fixed image. Therefore, the terminal may detect the gray-scale voltages of the pixels of the display screen, and select a first area including pixels whose gray-scale voltages are predetermined voltage values as the target area.

For example, as shown in FIG. 2, an example in which the terminal is a mobile phone is used. When the terminal displays a pattern unlock interface, the unlock interface includes a background image and an unlock button image. Because gray scales of the background image and the unlock button image are both particular values, a gray-scale voltage of a screen pixel used to display the background image is a first preset voltage, and a gray-scale voltage of a screen pixel used to display the unlock button image is a second preset voltage. The terminal may obtain the gray-scale voltages of the pixels of the display screen. Therefore, it may be determined that an area including pixels whose gray-scale voltages are the first preset voltages is an area in which the background image is displayed, and it may be determined that an area including pixels whose gray-scale voltages are the second preset voltages is an area in which the unlock button image is displayed. The area including pixels whose gray-scale voltages are the first preset voltages and the area including pixels whose gray-scale voltages are the second preset voltages are combined to form the target area used to display the fixed image.

In another implementation, when a fixed image is displayed, gray scales of pixels that are used to display the fixed image and that are in the display screen are stable, and a stable gray-scale voltage is maintained for a relatively long period of time. Therefore, the terminal may also detect gray-scale voltage duration of the pixels of the display screen, and select a second area including pixels whose gray-scale voltage duration exceeds a preset time threshold as the target area. The preset time threshold may be set according to requirements.

For example, when the display screen displays application content, images displayed in some areas change with the application content. However, images displayed in some areas do not change with an application picture. Areas in which images do not change with the application picture include a virtual key area, a notification bar area, and the like. That is, gray-scale voltages of pixels in some areas in the display screen change relatively frequently, and gray-scale voltages of pixels in remaining areas remain stable. Therefore, when the terminal detects that gray-scale voltages of some pixels remain stable for a time exceeding a predetermined time threshold, for example, for over 30 seconds, an area including these pixels is considered to be the target area used to display the fixed image.

When some user interfaces are displayed, a fixed image is necessarily displayed in a particular area in the display screen. Therefore, the terminal may also directly use a preset area in the display screen as the target area.

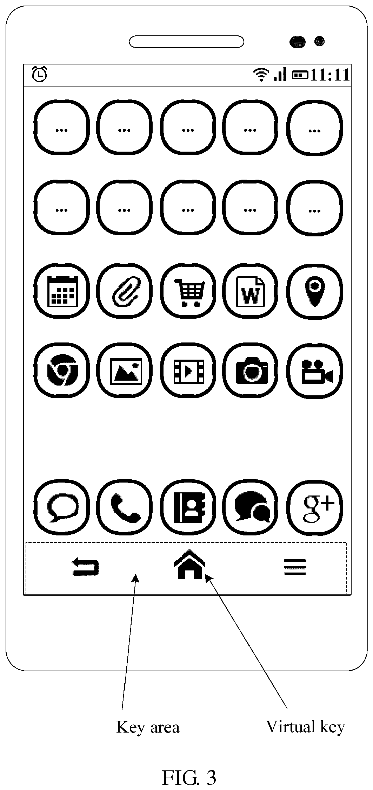

For example, as shown in FIG. 3, when the display screen displays an application menu interface, generally, some areas are used to display a virtual key in a user interface. In addition, as long as the display screen displays the application menu interface, regardless of any change of an image displayed in another area, a virtual key area used to display the virtual key displays the virtual key and the background image without any change. Therefore, the terminal may first determine whether the display screen displays the application menu interface. When the display screen displays the application menu interface, the terminal may use a preset area that is used to display the virtual key and that is in the display screen as the target area.

In addition, when the display screen displays a game interface, a video play, or the like, a case in which content displayed in some areas does not change for a long time may also occur. To prevent inconvenience to use of the user that is caused by adjustment on an image display manner in this case, the terminal may first determine whether the display screen displays a particular user interface, and when the display screen displays the particular user interface, determine the target area in which an image is fixedly displayed and that is in the display screen. The particular user interface may be an unlock interface, an application menu interface, or the like.

For example, the terminal may first determine whether the display screen displays the application menu interface, and when determining that the display screen is displaying the application menu interface, perform the step of determining a target area in which an image is fixedly displayed and that is in a display screen. When determining that the display screen does not display the application menu interface, for example, determining that the display screen is displaying a game interface or a video play interface, the terminal may not perform the step of determining a target area in which an image is fixedly displayed and that is in a display screen.

Step 102: Obtain a specified image displayed in the target area.

After the target area is determined, the terminal may also first obtain an overall image displayed by the display screen and then select, from the overall image, an image displayed in the target area as the specified image. Alternatively, the terminal may restore the specified image according to gray-scale voltages of pixels, currents, and the like of the target area.

For example, when the display screen displays a pattern unlock interface, generally, the target area is the entire display screen. In this case, the terminal may directly use an entire image displayed by the display screen as the specified image. For another example, when the display screen displays an application menu interface, the target area may be an area in which a virtual key is displayed. In this case, the terminal may use an image of the virtual key as the specified image.

Step 103: Adjust a display manner of the specified image on the display screen in a manner of respectively and independently performing gray-scale adjustment on different areas in the specified image.

According to different specified images, the terminal may respectively and independently perform gray-scale adjustment on different areas in the specified image in different adjustment manners, to prevent that the gray-scale voltages of the pixels in the target area do not change for a long time, thereby reducing a probability of appearance of a screen residual image on the display screen.

In a possible implementation, when the specified image includes the functional image and the background image, the terminal may first identify a functional image and a background image from the specified image, and then periodically exchange gray scales of the functional image and the background image, so as to prevent that the gray-scale voltage of the pixels of the target area do not change for a long time.

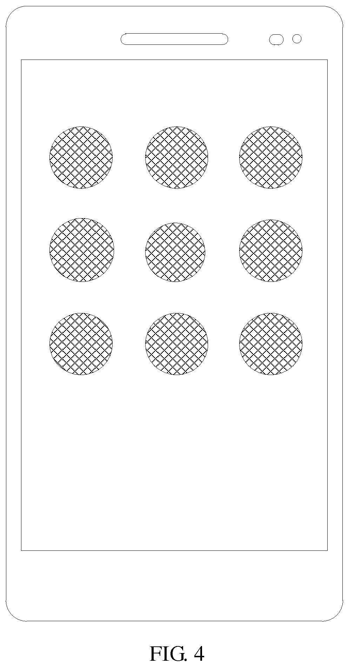

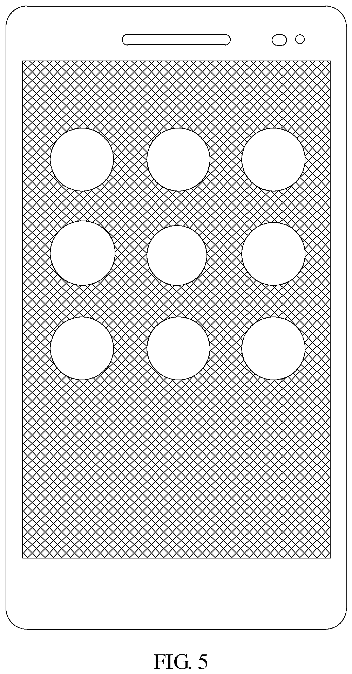

For example, when the specified image is a pattern unlock interface, generally, the pattern unlock interface includes an unlock button image and an unlock background. Because gray scales of the unlock button image and the unlock background are different, the terminal may first identify the unlock background and the unlock button image from the unlock interface according to the gray scales, and then periodically exchange gray scales of the unlock background and an unlock button. When the gray scale of the unlock button is 255, and the gray scale of the unlock background is 0, the terminal alternately displays, in the target area, a pattern unlock interface in which the gray scale of the unlock button is 255, and the gray scale of the unlock background is 0 and a pattern unlock interface in which the gray scale of the unlock button is 0, and the gray scale of the unlock background is 255. That is, the terminal may periodically and alternately display pattern unlock interfaces shown in FIG. 4 and FIG. 5.

To further weaken a residual image effect of an OLED and better prevent a screen residual image, the terminal may first set the gray scale of the functional image to a first preset gray scale, and set the gray scale of the background image to a second preset gray scale, and then periodically exchange the gray scales of the unlock background and the unlock button. When the gray scale of the functional image is higher than the gray scale of the background image, the gray scale of the functional image is higher than the first preset gray scale, the first preset gray scale is higher than the second preset gray scale, and the second preset gray scale is higher than the gray scale of the background image. When the gray scale of the functional image is lower than the gray scale of the background image, the gray scale of the functional image is lower than the first preset gray scale, the first preset gray scale is lower than the second preset gray scale, and the second preset gray scale is lower than the gray scale of the background image.

For example, when an icon gray scale is 255, and a background gray scale is 0, the terminal may first set the gray scale of the unlock button to 100, and set the background gray scale to 200. Then, the terminal may adjust the gray scale of the unlock button to 200 and adjust the gray scale of the unlock background to 100 in a period, and then adjust the gray scale of the unlock button to 100 and adjust the gray scale of the unlock background to 200 in a next period.

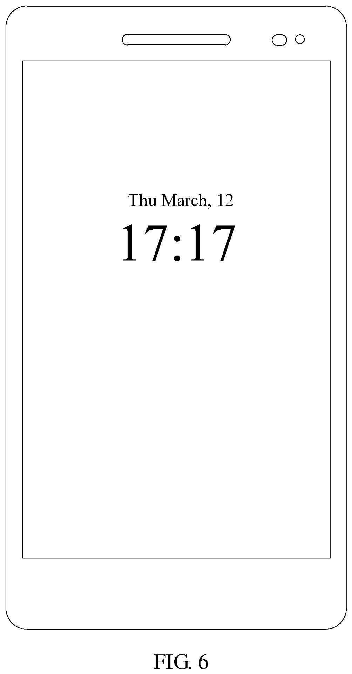

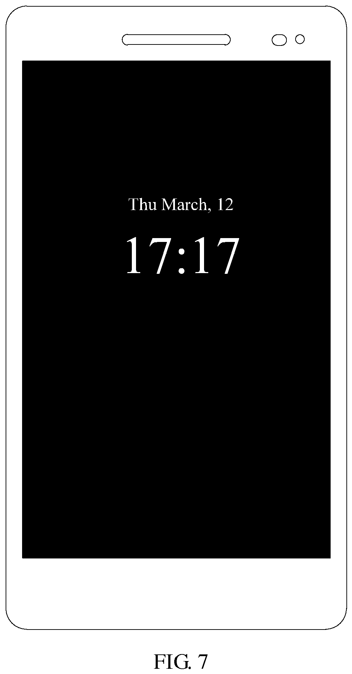

In another possible implementation, the terminal may also pre-generate an alternative image corresponding to the specified image. When the terminal periodically adjusts the display manner of the specified image on the display screen, the terminal may obtain the alternative image corresponding to the specified image, and periodically and alternately display the specified image and the alternative image in the target area. The alternative image may be generated by the terminal by performing gray-scale inversion on the specified image, may be generated by the terminal by adjusting a location of the functional image on the display screen after the terminal identifies the specified image and the functional image, or may be generated by the terminal in another manner. For example, when the specified image is shown in FIG. 6, the terminal may perform gray-scale inversion on the image shown in FIG. 6, to generate an alternative image shown in FIG. 7, and then periodically and alternately display, in the target area, the image shown in FIG. 6 and the image shown in FIG. 7.

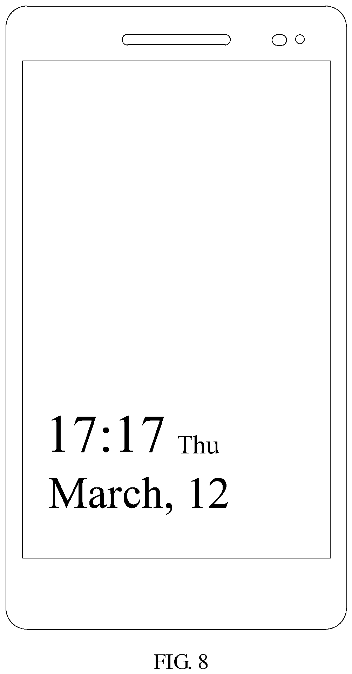

For another example, when the specified image is shown in FIG. 6, the terminal may also identify functional images, such as a time indication, in the specified image, then adjust a relative location between the functional images to generate an alternative image shown in FIG. 8, and then periodically and alternately display, in the target area, the image shown in FIG. 6 and the image shown in FIG. 8.

For another example, when the specified image is shown in FIG. 6, the terminal may also periodically and alternately display, in the target area, the image shown in FIG. 6 and an all-black image, that is, the terminal may display the specified image in a fine motion (Fine Motion) manner. In another possible implementation, the terminal may periodically adjust a display location of the specified image on the display screen, or may first identify a functional image and a background image from the specified image and then periodically adjust a display location of the functional image relative to the background image.

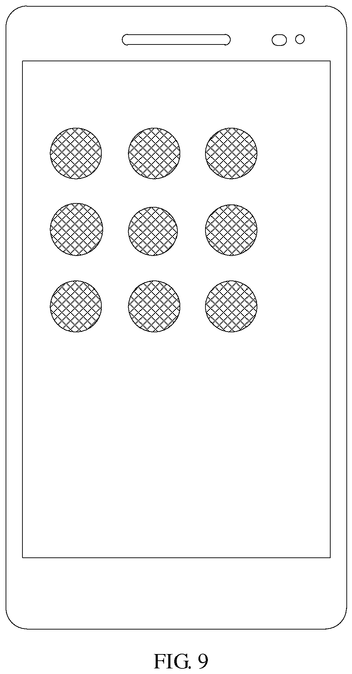

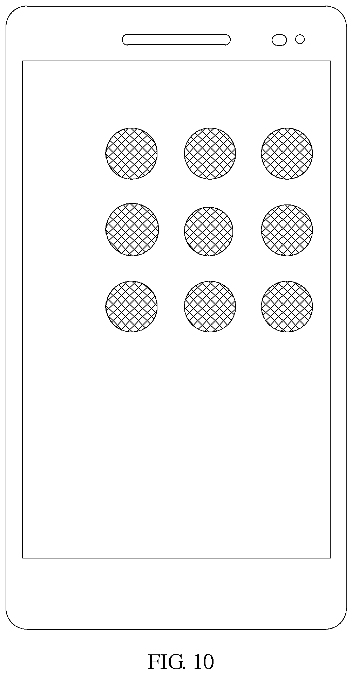

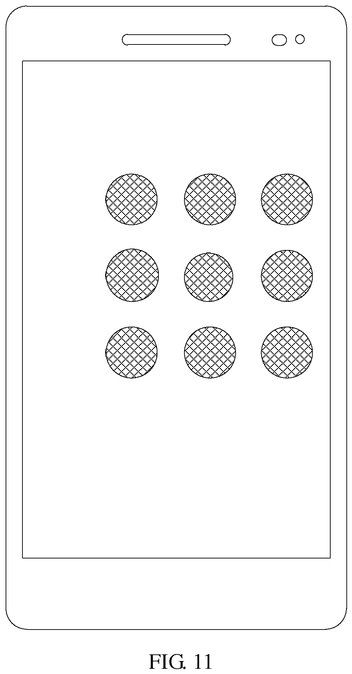

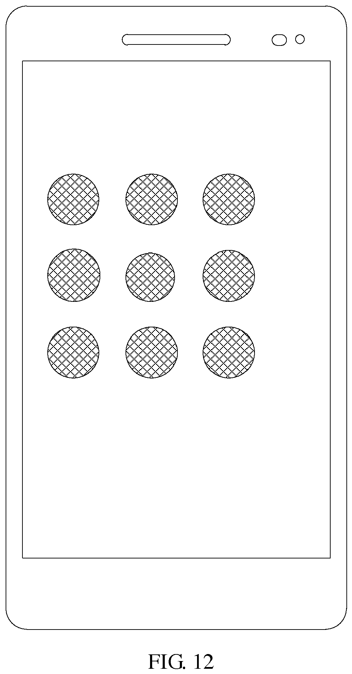

Using that the specified image is a pattern unlock interface as an example, the terminal may first identify an unlock key image and an unlock background image, then display the unlock key image at a location shown in FIG. 9 in a first display period, display the unlock key image in a manner shown in FIG. 10 in a second display period, display the unlock key image in a manner shown in FIG. 11 in a third display period, and display the unlock key image in a manner shown in FIG. 12 in a fourth display period. The process repeats according to the sequence.

In another possible implementation, the terminal may also first identify a profile curve of a functional image in the specified image and then set gray scales of a specified quantity of pixels at two sides of the profile curve to a third preset gray scale. On this basis, the terminal may also periodically adjust a gray scale of the functional image, a gray scale of a background image, and the third preset gray scale.

For example, the terminal may first identify the profile curve of the functional image in the specified image and then respectively set different gray-scale voltages for the specified quantity of pixels at two sides of the profile curve, so that that a pattern including the specified quantity of pixels presents a display effect of gradually transiting from the gray scale of the functional image to the gray scale of the background image. On this basis, the gray scales of the functional image and the background image may also be periodically exchanged, and the third preset gray scale is correspondingly adjusted, to ensure that the pattern including the specified quantity of pixels can still present the display effect of gradually transiting from the gray scale of the functional image to the gray scale of the background image.

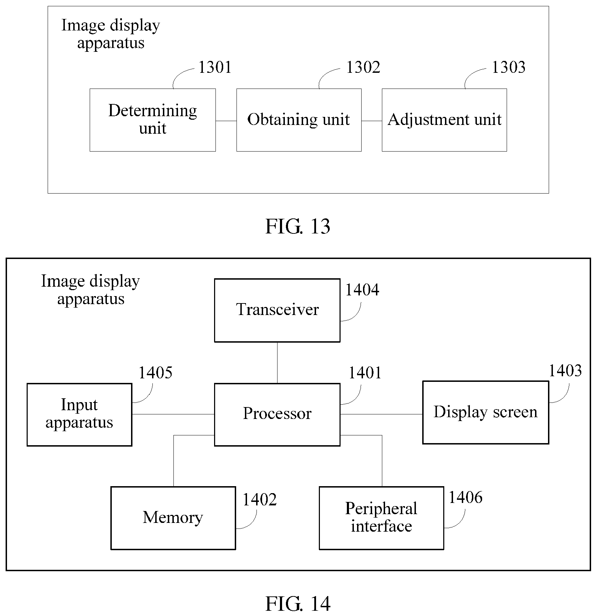

In this embodiment, a terminal may determine a target area in which an image is fixedly displayed and that is in a display screen, obtain a specified image displayed in the target area, and periodically adjust a display manner of the specified image on the display screen. By means of this embodiment, the terminal may periodically adjust the display manner of the specified image on the display screen, so as to prevent the specified image from being displayed in the target area in the display screen for a long time, and alleviate that a screen residual image is generated on the display screen due to that the specified image is displayed on the display screen for an excessively long time. Referring to FIG. 13, FIG. 13 is a schematic structural diagram of an image display apparatus according to an embodiment of the present invention.

As shown in FIG. 13, the apparatus includes: a determining unit 1301, an obtaining unit 1302, and an adjustment unit 1303.

The determining unit 1301 is configured to determine a target area in which an image is fixedly displayed and that is in a display screen. The obtaining unit 1302 is configured to obtain a specified image displayed in the target area. The adjustment unit 1303 is configured to adjust a display manner of the specified image on the display screen in a manner of respectively and independently performing gray-scale adjustment on different areas in the specified image.

Optionally, the determining unit 1301 is specifically configured to: when the display screen displays an unlock interface or displays an application menu interface, determine the target area in which an image is fixedly displayed and that is in the display screen.

Optionally, the determining unit 1301 includes: a first detection subunit and a first selection subunit. The first detection subunit is configured to detect gray-scale voltages of pixels of the display screen. The first selection subunit is configured to select a first area including pixels whose gray-scale voltages are predetermined voltage values as the target area.

Optionally, the determining unit 1301 includes: a second detection subunit and a second selection subunit. The second detection subunit is configured to detect gray-scale voltage duration of pixels of the display screen. The second selection subunit is configured to select a second area including pixels whose gray-scale voltage duration exceeds a preset time threshold as the target area. Optionally, the adjustment unit 1303 includes: a first identification subunit and a gray scale exchange subunit. The first identification subunit is configured to identify a functional image and a background image from the specified image. The gray scale exchange subunit is configured to periodically exchange predetermined gray scales of the functional image and the background image. The adjustment unit 1303 may further include: a first setting subunit, configured to: set the predetermined gray scale of the functional image to a first preset gray scale and set the predetermined gray scale of the background image to a second preset gray scale, where the first preset gray scale is different from the second preset gray scale.

Optionally, the adjustment unit 1303 includes: an alternative-image generation subunit and an image adjustment subunit. The alternative-image generation subunit is configured to generate an alternative image corresponding to the specified image. The image adjustment subunit is configured to periodically and alternately display the specified image and the alternative image in the target area.

Optionally, the adjustment unit 1303 includes: a second identification subunit and a location adjustment subunit. The second identification subunit is configured to identify a functional image and a background image from the specified image. The location adjustment subunit is configured to periodically adjust a display location of the functional image relative to the background image. Optionally, the adjustment unit 1303 includes: a third identification subunit, configured to identify a profile curve of a functional image from the specified image; and a second setting subunit, configured to set gray scales of a specified quantity of pixels at two sides of the profile curve to a third preset gray scale.

By means of this embodiment, a terminal may periodically adjust a display manner of the specified image on the display screen, so as to prevent the specified image from being displayed in a target area in the display screen for a long time, and alleviate that a screen residual image is generated on the display screen due to that the specified image is displayed on the display screen for an excessively long time.

Referring to FIG. 14, FIG. 14 is another schematic structural diagram of an image display apparatus according to an embodiment of the present invention. In an implementation of the present invention, the image display apparatus may be any mobile or portable electronic device, including, but not limited to, a mobile phone, a mobile computer, a tablet computer, a personal digital assistant (Personal Digital Assistant, PDA), a media player, a smart television, a combination of two or more of the foregoing items, and the like.

As shown in FIG. 14, the apparatus includes components such as a processor 1401, a memory 1402, and a display screen 1403, and may further include components such as a transceiver 1404, an input apparatus 1405, and a peripheral interface 1406. The components may be connected by using one or more buses. The processor 1401 is configured to: determine a target area that is used to display a fixed image and that is in the display screen 1403; obtain a specified image displayed in the target area; and adjust a display manner of the specified image on the display screen 1403 in a manner of respectively and independently performing gray-scale adjustment on different areas in the specified image.

Optionally, the processor 1401 may be further configured to: detect gray-scale voltages of pixels of the display screen 1403; and select a first area including pixels whose gray-scale voltages are predetermined voltage values as the target area.

Optionally, the processor 1401 may be further configured to: detect gray-scale voltage duration of pixels of the display screen 1403; and select a second area including pixels whose gray-scale voltage duration exceeds a preset time threshold as the target area.

Optionally, the processor 1401 may be further configured to: identify a functional image and a background image from the specified image; and periodically exchange gray scales of the functional image and the background image.

Optionally, the processor 1401 may be further configured to: set the gray scale of the functional image to a first preset gray scale; and set the gray scale of the background image to a second preset gray scale, where the first preset gray scale is different from the second preset gray scale. Optionally, the processor 1401 may be further configured to: generate an alternative image corresponding to the specified image; and periodically and alternately display the specified image and the alternative image in the target area.

Optionally, the processor 1401 may be further configured to: identify a functional image and a background image from the specified image; and periodically adjust a display location of the functional image relative to the background image.

Optionally, the processor 1401 may be further configured to: identify a profile curve of a functional image from the specified image; and set gray scales of a specified quantity of pixels at two sides of the profile curve to a third preset gray scale.

Optionally, the processor 1401 may be further configured to: when the display screen 1403 displays an unlock interface or displays an application menu interface, determine the target area that is used to display the fixed image and that is in the display screen 1403.

By means of this embodiment, a terminal may periodically adjust a display manner of the specified image on the display screen, so as to prevent the specified image from being displayed in a target area in the display screen for a long time, and alleviate that a screen residual image is generated on the display screen due to that the specified image is displayed on the display screen for an excessively long time.

In specific implementation, the present invention further provides a computer storage medium, where the computer storage medium may store a program, and when the program is executed, some or all of the steps of the embodiments of the image display method provided in the present invention may be performed. The storage medium may be a magnetic disk, an optical disc, a read-only memory (Read-Only Memory, ROM), a random access memory (Random Access Memory, RAM), or the like.

A person skilled in the art may clearly understand that, the technologies in the embodiments of the present invention may be implemented by software in addition to a necessary general hardware platform. Based on such an understanding, the technical solutions of the present invention essentially or the part contributing to the prior art may be implemented in a form of a software product. The software product is stored in a storage medium, such as a ROM/RAM, a hard disk, or an optical disc, and includes several instructions for instructing a computer device (which may be a personal computer, a server, or a network device) to perform the methods described in the embodiments or some parts of the embodiments of the present invention.

The embodiments in this specification are all described in a progressive manner, for same or similar parts in the embodiments, reference may be made to these embodiments, and each embodiment focuses on a difference from other embodiments. Especially, apparatus and system embodiments are basically similar to a method embodiment, and therefore are described briefly; for related parts, reference may be made to partial descriptions in the method embodiment.

The foregoing descriptions are implementations of the present invention, but are not intended to limit the protection scope of the present invention. Any modification, equivalent replacement, and improvement made without departing from the spirit and principle of the present invention shall fall within the protection scope of the present invention.

## Claims

1. An image display method, comprising:
determining a target area in which an image is fixedly displayed and that is in a display screen;
obtaining a specified image displayed in the target area; and
adjusting a display manner of the specified image on the display screen in a manner of respectively and independently performing gray-scale adjustment on different areas in the specified image.

2. The method according to claim 1, wherein the determining a target area in which an image is fixedly displayed and that is in a display screen comprises:
detecting gray-scale voltages of pixels of the display screen; and
selecting a first area comprising pixels whose gray-scale voltages are predetermined voltage values as the target area.

3. The method according to claim 1, wherein the determining a target area in which an image is fixedly displayed and that is in a display screen comprises:
detecting gray-scale voltage duration of pixels of the display screen; and
selecting a second area comprising pixels whose gray-scale voltage duration exceeds a preset time threshold as the target area.

4. The method according to any one of claims 1 to 3, wherein the adjusting a display manner of the specified image on the display screen in a manner of respectively and independently performing gray-scale adjustment on different areas in the specified image comprises:
identifying a functional image and a background image from the specified image; and
periodically exchanging gray scales of the functional image and the background image.

5. The method according to claim 4, before the periodically exchanging gray scales of the functional image and the background image, further comprising:
setting the gray scale of the functional image to a first preset gray scale and setting the gray scale of the background image to a second preset gray scale, wherein the first preset gray scale is different from the second preset gray scale.

6. The method according to any one of claims 1 to 3, wherein the adjusting a display manner of the specified image on the display screen in a manner of respectively and independently performing gray-scale adjustment on different areas in the specified image comprises:
generating an alternative image corresponding to the specified image; and
periodically and alternately displaying the specified image and the alternative image in the target area.

7. The method according to any one of claims 1 to 3, wherein the adjusting a display manner of the specified image on the display screen in a manner of respectively and independently performing gray-scale adjustment on different areas in the specified image comprises:
identifying a functional image and a background image from the specified image; and
periodically adjusting a display location of the functional image relative to the background image.

8. The method according to any one of claims 1 to 3, wherein the adjusting a display manner of the specified image on the display screen in a manner of respectively and independently performing gray-scale adjustment on different areas in the specified image comprises:
identifying a profile curve of a functional image from the specified image; and
setting gray scales of a specified quantity of pixels at two sides of the profile curve to a third preset gray scale.

9. The method according to any one of claims 1 to 8, wherein the determining a target area in which an image is fixedly displayed and that is in a display screen comprises:
when the display screen displays an unlock interface or displays an application menu interface, determining the target area in which an image is fixedly displayed and that is in the display screen.

10. An image display apparatus, comprising:
a determining unit, configured to determine a target area in which an image is fixedly displayed and that is in a display screen;
an obtaining unit, configured to obtain a specified image displayed in the target area; and
an adjustment unit, configured to adjust a display manner of the specified image on the display screen in a manner of respectively and independently performing gray-scale adjustment on different areas in the specified image.

11. The apparatus according to claim 10, wherein the determining unit comprises:
a first detection subunit, configured to detect gray-scale voltages of pixels of the display screen;
and
a first selection subunit, configured to select a first area comprising pixels whose gray-scale voltages are predetermined voltage values as the target area.

12. The apparatus according to claim 10, wherein the determining unit comprises:
a second detection subunit, configured to detect gray-scale voltage duration of pixels of the display screen; and
a second selection subunit, configured to select a second area comprising pixels whose gray-scale voltage duration exceeds a preset time threshold as the target area.

13. The apparatus according to any one of claims 10 to 12, wherein the adjustment unit comprises:
a first identification subunit, configured to identify a functional image and a background image from the specified image; and
a gray scale exchange subunit, configured to periodically exchange predetermined gray scales of the functional image and the background image.

14. The apparatus according to claim 13, wherein the adjustment unit further comprises:
a first setting subunit, configured to: set the predetermined gray scale of the functional image to a first preset gray scale and set the predetermined gray scale of the background image to a second preset gray scale, wherein the first preset gray scale is different from the second preset gray scale.

15. The apparatus according to any one of claims 10 to 12, wherein the adjustment unit comprises:
an alternative-image generation subunit, configured to generate an alternative image corresponding to the specified image; and
an image adjustment subunit, configured to periodically and alternately display the specified image and the alternative image in the target area.

16. The apparatus according to any one of claims 10 to 12, wherein the adjustment unit comprises:
a second identification subunit, configured to identify a functional image and a background image from the specified image; and
a location adjustment subunit, configured to periodically adjust a display location of the functional image relative to the background image.

17. The apparatus according to any one of claims 10 to 12, wherein the adjustment unit comprises:
a third identification subunit, configured to identify a profile curve of a functional image from the specified image; and
a second setting subunit, configured to set gray scales of a specified quantity of pixels at two sides of the profile curve to a third preset gray scale.

18. The apparatus according to any one of claims 10 to 17, wherein
the determining unit is specifically configured to: when the display screen displays an unlock interface or displays an application menu interface, determine the target area in which an image is fixedly displayed and that is in the display screen.

19. An image display apparatus, comprising a processor, a memory, and a display screen,
wherein
the processor is configured to: determine a target area that is used to display a fixed image and that is in the display screen; obtain a specified image displayed in the target area; and adjust a display manner of the specified image on the display screen in a manner of respectively and independently performing gray-scale adjustment on different areas in the specified image.
